# EUROPEAN PATENT APPLICATION

(11) **EP 2 388 711 A2**
(43) Date of publication of application: **23.11.2011**
(21) Application number: 11162757.6
(22) Date of filing: 15.04.2011
(51) Int. Cl.: G06F 17/28

(54) **System and method for translating an english language message into another language**

(30) Priority: 26.04.2010 US 767464
(71) Applicant: Honeywell International, Inc., Morristown, New Jersey 07962-2245 (US)
(72) Inventor: Wise, John Anthony, Morristown, NJ 07962-2245 (US); Burgin, Roger W., Morristown, NJ 07962-2245 (US); Pepitone, Dave, Morristonw, NJ 07962-2245 (US)
(74) Representative: Buckley, Guy Julian

(57) **Abstract**

A system for translating an English language message into another language includes, but is not limited to, a data storage unit configured to store an English language phrase and a corresponding other language phrase, a display unit configured to display text in English and in the other language and a processor that is operatively coupled to the data storage unit and to the display unit. The processor is configured to obtain an English language message, to retrieve the English language phrase from the data storage unit, to compare the English language message with the English language phrase, to obtain the other language phrase if the English language message is substantially the same as the English language phrase, and to command the display unit to display the other language phrase in the other language.

## Description

### TECHNICAL FIELD

The present invention generally relates to translations and more particularly relates to systems and methods for translating an English language message into another language.

### BACKGROUND

English is the internationally accepted language for conducting communications between a pilot and an air traffic controller. All air traffic control instructions, clearances, and communications transmitted by an air traffic controller to a pilot, and all requests for clearances and other information transmitted by a pilot to an air traffic controller are required to be in English. This requirement applies to both voice communications and to messages exchanged over a data link.

The Radio Technical Commission for Aeronautics (hereinafter, the "RTCA") is a not-for-profit corporation that was formed to advance the art and science of aviation and aviation electronic systems for the benefit of the public. At various periods throughout aviation history, the RTCA has developed and promulgated a finite list of standard English language phrases that are to be used by air traffic controllers and pilots for the provision and receipt of air traffic control instructions. The RTCA has also prescribed a standard format or syntax for composing such standard English language phrases This finite list of standard English language phrases is currently being revised by Special Committee 214 of the RTCA (hereinafter "SC214"). The current finite list of standard English language phrases and all future revisions to this list, will be referred to herein as "aviation English".

Aviation English has been adopted by the International Civil Aviation Agency (a United Nations agency), which includes the Federal Aviation Administration and its counterpart organizations in other countries throughout the world. Accordingly, the FAA and its international counterpart organizations require that pilots be proficient at speaking and understanding aviation English. As presently implemented, if a pilot speaks language X, and the pilot is flying through airspace controlled by a country where language x is spoken, then the pilot and the air traffic controller in that country will communicate in language X. However, if the pilot is flying through airspace controlled by a country where language Y is spoken, if the pilot does not speak language Y, then the air traffic controller and the pilot will communicate with each other in English. This is, in part, to ensure that communications and the provision of critical information to pilots and other members of an aircrew can be reliably and predictably exchanged and understood.

Despite this requirement, it is has been observed that some pilots are not proficient at communicating in aviation English in an operational environment with different accented styles of aviation English. This lack of proficiency creates the risk that a pilot, an air traffic controller, or both, will fail to understand communications exchanged between the controller and the pilot. This, in turn, can potentially result in confusion and in a diminution of overall situational awareness by the pilot, the air traffic controller, or both.

### BRIEF SUMMARY

Disclosed herein are embodiments of systems and methods for translating an English language message into another language.

In an embodiment, the system includes, but is not limited to, a data storage unit that is configured to store an English language phrase and a phrase in one or more other languages that corresponds to the English language phrase. The system further includes a display unit that is configured to display text in English and in another language that corresponds with the other language phrase. A processor is operatively coupled to the data storage unit and to the display unit. The processor is configured to obtain an English language message from a component onboard the aircraft, to retrieve the English language phrase from the data storage unit, to compare the English language message with the English language phrase, to obtain the other language phrase if the English language message is substantially the same as the English language phrase, and to command the display unit to display the other language phrase in the other language.

In another embodiment, the system includes, but is not limited to, a receiver that configured to receive a wireless signal carrying an English language voice transmission. The system further includes a data storage unit that is configured to store an English language phrase and another language phrase corresponding to the English language phrase. The system further includes a display unit that is configured to display text in English and in another language that corresponds with the other language phrase. The system further includes a processor that is communicatively coupled to the receiver and that is operatively coupled to the data storage unit and to the display unit. The processor is configured to obtain the English language voice transmission from the receiver, to convert the English language voice transmission into an English language message, to retrieve the English language phrase from the data storage unit, to compare the English language message with the English language phrase, to obtain the other language phrase if the English language message is substantially the same as the English language phrase, and to command the display unit to display the other language phrase in the other language.

In another embodiment, a method includes, but is not limited to the steps of receiving an English language message with a wireless receiver, comparing the English language message to a stored English language phrase with a processor to determine if the English language message is substantially the same as the English language phrase and displaying another language phrase corresponding to the English language phrase when it is determined that the English language phrase is substantially the same as the English language message.

### BRIEF DESCRIPTION OF THE DRAWINGS

The present invention will hereinafter be described in conjunction with the following drawing figures, wherein like numerals denote like elements, and

FIG. 1 is a schematic view of an embodiment of a system for translating an English language message into another language;

FIG. 2 is a schematic view of another embodiment of a system for translating an English language message into another language;

FIG. 3 is an exemplary look-up table compatible for use with the systems illustrated in FIGS. 1 and 2;

FIG. 4 illustrates an exemplary display screen displaying an English language phrase and a corresponding other language phrase;

FIG. 5 illustrates an exemplary display screen displaying only the other language phrase; and

FIG. 6 is a block diagram illustrating various steps of a method for translating an English language message into another language.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved system and method for translating an English language message into another language is disclosed herein. English language messages may originate from a variety of sources, including, but not limited to, onboard systems, radio transmissions from ground controllers, radio transmissions from other aircraft, and data link transmissions. These English language messages are provided to a processor which is configured to compare them to a list of stored English phrases. If an identical or nearly identical English language phrase is located, a phrase in another language that corresponds to the English language phrase is visually displayed to the pilot. The system may be configured to permit the pilot to select from between a number of other languages and a number of different formats for displaying the other language phrase. As used herein, the term "other language" refers to a language other than English.

A greater understanding of the embodiments of the system and method for translating an English language message into another language may be obtained through a review of the illustrations accompanying this application together with a review of the detailed description that follows.

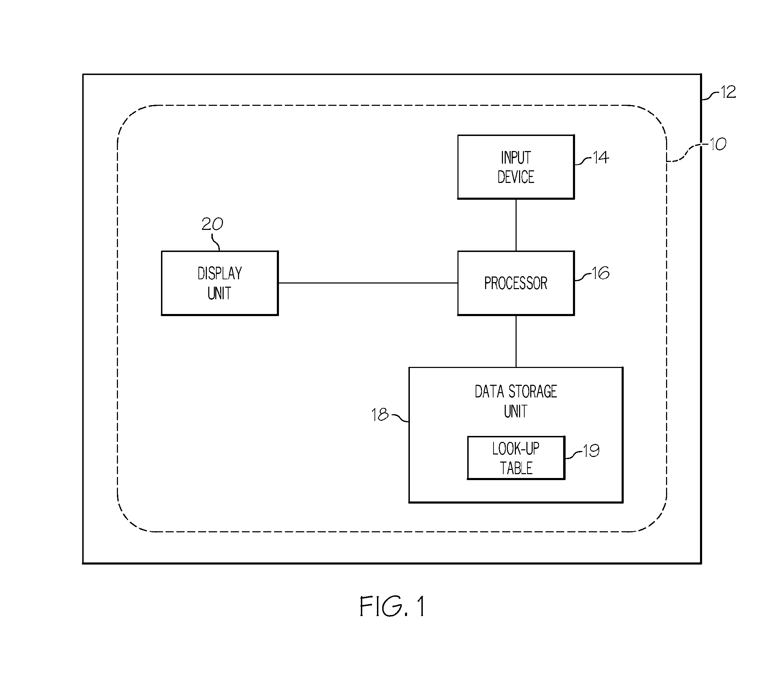

FIG. 1 is a schematic view of an embodiment of a system 10 for translating an English language message into another language. Although the embodiments of system 10 illustrated herein are shown and discussed in conjunction with use onboard an aircraft 12, it should be understood that system 10 may also be used in any other suitable environment and application where English language messages need to be translated into another language. System 10 includes an input device 14, a processor 16, a data storage unit 18, and a display unit 20. As discussed below, in other embodiments, system 10 may include additional components.

Input device 14 may be any suitable component that is configured to permit a user, including, but not limited to, a pilot, an aircrew member, or any other person to, input information into processor 16. For example, input device 14 may comprise a computer key board, a mouse, a trackball, a cursor control device, a touch pad, a touch screen, a microphone, a camera, or any other device or combination of devices which permit a user to input information into processor 16. In some embodiments, input device 14 may be an independent component while in other embodiments, input device 14 may integral with other components of system 10. In still other embodiments, a single component of system 10 may serve a dual role, one of which is service as input device 14. For example, a single component may serve as both an input device for other onboard systems and also as input device 14 for system 10.

Data storage unit 18 may be any type of electronic memory device that is configured to store data. For example, data storage unit 18 may include, without limitation, non-volatile memory, disk drives, tape drives, and mass storage devices and may include any suitable software, algorithms and/or sub-routines that provide the data storage component with the capability to store, organize, and permit retrieval of data. In some embodiments, data storage unit 18 may comprise only a single component. In other embodiments, data storage unit 18 may comprise a plurality of components acting in concert. In some embodiments, data storage unit 18 may be dedicated for use exclusively with system 10 while in other embodiments, data storage unit 18 may be shared with other systems.

Display unit 20 may be any sort or type of display system that is configured to display text, both in English and in one or more other languages. Examples of suitable display systems include, but are not limited to, a flat panel display device, a Liquid Crystal Display (LCD) device, a thin film transistor (TFT) display device, a plasma display device, an electro-luminescent display device, a Light Emitting Diode (LED) display device, a holographic display device, a Micro Mirror Device (MMD) display device, a lens, a projector or the like.

In some embodiments, display unit 20 may comprise a near-to-eye display unit that is configured to be worn by a pilot. Such a near-to-eye display unit may be any head mounted display system capable of presenting images to a pilot in close proximity to the pilot's eye or eyes. Such near-to-eye display units typically include an attachment mechanism (e.g., chin strap) for securing the near-to-eye display unit to the head of the pilot. Near-to-eye display units are well known in the art and exemplary near-to-eye display units are disclosed in U.S. Patent Nos. RE28,847; 5,003,300; 5,539,422; 5,742,263; and 5,673,059, each of which are hereby incorporated herein in their entirety.

Processor 16 may be any type of computer, computer system, microprocessor, collection of logic devices such as field-programmable gate arrays (FPGA), or any other analog or digital circuitry that is configured to calculate, and/or to perform algorithms, and/or to execute software applications, and/or to execute sub-routines, and/or to be loaded with and to execute any type of computer program. Processor 16 may comprise a single processor or a plurality of processors acting in concert. In some embodiments, processor 16 may be dedicated for use exclusively with system 10 while in other embodiments processor 16 may be shared with other systems. In still other embodiments, processor 16 may be integrated with any of the other components of system 10, such as, but not limed to, display unit 20, data storage unit 18 and input device 14.

In the embodiment illustrated in FIG. 1, processor 16 is operatively coupled to display unit 20 and to data storage unit 18, and communicatively coupled to input device 14. As discussed in detail below, processor 16 is also configured to be communicatively coupled with another system or component located onboard aircraft 12 and further configured to receive English language messages from such other system or component. The coupling of processor 16 to the various components discussed above may be effected through the use of any suitable means of transmission including both wired and wireless connections. For example, each component may be physically connected to processor 16 via a coaxial cable or via any other type of wire connection effective to convey electronic signals. In the illustrated embodiment, processor 16 is directly coupled with each of the other components. In other embodiments, each component may be communicatively coupled to processor 16 across a bus or other similar communication corridor. In other embodiments, the coupling of the various components with processor 16 may include additional elements positioned in an intervening manner between processor 16 and any or all of the various components. In still other examples, each component may be connected wirelessly to processor 16 via any wireless connection effective to communicate signals between components. Examples of suitable wireless connections include, but are not limited to, a Bluetooth connection, a WiFi connection, an infrared connection or the like.

Being communicatively or operatively coupled provides a pathway for the transmission of commands, instructions, interrogations, and other signals between processor 16 and each of the other components. Through this pathway, processor 16 may control and/or communicate with each of the other components. Data storage unit 18 and display unit 20 are each configured to interface and communicate with processor 16 and processor 16 is configured to control data storage unit 18 and display unit 20 in a manner that provides translations for English language messages.

Towards this end, data storage unit 18 is configured to store data including multiple English language phrases and their respective other language phrase translations. In some embodiments, such English language phrases have been composed in aviation English. In other embodiments, such English language phrases include error messages, warning messages, and/or status messages that are commonly generated by various systems and/or components onboard aircraft 12. Data storage unit 18 is further configured to organize such data in a manner that correlates the other language phrases with their respective English language phrases. In some examples, such data may be arranged in a look-up table 19 or in multiple look-up tables 19. For example, a first look-up table 19 may contain English language phrases composed of aviation English and a second look-up table 19 may contain English language phrases composed of common messages generated by systems and/or components onboard aircraft 12. In some embodiments, multiple look-up tables 19 may each correspond to a different language, or a single look-up table 19 may contain other language phrases in multiple other languages. In this manner, data storage unit 18 may support an embodiment of system 10 that is configured to assist multiple pilots, each of whom speak a different language. Data storage unit 18 is further configured to provide such other language phrases to processor 16 when commanded by processor 16 to produce such other language phrases.

Display unit 20 is configured to receive commands from processor 16 and to display text in English and/or in another language in response to such commands. In this manner, processor 16 may retrieve a desired other language phrase from data storage unit 18 and provide commands to display unit 20 to display the other language phrase.

Input device 14 may be used by the pilot of aircraft 12 to control system 10. For example, input device 14 may be used by the pilot to turn system 10 on or off. Additionally, in embodiments where system 10 includes multiple display units 20, the pilot may use input device 14 to select which display unit 20 should be used to display the other language phrases. The pilot may also use input device 14 to control the presentation of the other language phrase when it is displayed. In some embodiments, system 10 may not include input device 14. In such examples, system 10 would be configured to operate automatically.

System 10 functions as follows. Processor 16 is configured to receive an English language message, and to then interact with, coordinate with, and/or orchestrate the activities of each of the other components of system 10 for the purpose of displaying an other language phrase on display unit 20 that corresponds to the English language message. In some examples, the message will originate with an onboard system. Many of the systems and components onboard aircraft 12 may be configured to generate messages pertaining to that system at various times or after the occurrence of certain events. For example, the landing gear system for aircraft 12 may be configured to generate an English language message indicating that the landing gear remains deployed if the aircraft ascends above a predetermined altitude while the landing gear is down. Such a message would remind a pilot to retract the landing gear. In another example, the landing gear system may be configured to generate an English language message indicating that the landing gear remains retracted if the aircraft descends below a predetermined altitude while the landing gear is up. Such a message would warn the pilot that the aircraft is not configured for landing. These and other English language messages generated by the various systems onboard aircraft 12 are transmitted by such systems to processor 16 for display on display unit 20.

Typically, such messages are composed in English and may not be readily understood by a pilot whose native language is not English. Accordingly, when processor 16 receives such an English language message, processor 16 sends a command to data storage unit 18 instructing data storage unit 18 to provide the English language phrases stored in data storage unit 18. In some embodiments, the onboard system and/or component where such English language message originates may be configured to encode the English language message with an identifier that permits processor 16 to determine the source of the English language message. In embodiments where data storage unit 18 stores data in multiple look-up tables 19 and wherein each look-up table 19 corresponds to a different source for English language messages, processor 16 may be configured to utilize the identifier to instruct data storage unit 18 to produce data from a specific look-up table 19 corresponding to the onboard system and/or component where such English language message originated.

Once processor 16 receives the English language phrases from data storage unit 18, processor 16 compares the English language message with each English language phrase. This comparison may be accomplished in a variety of different ways, including a comparison of the character strings comprising the English language message with the character strings comprising each English language phrase. Other comparison protocols may also be implemented. The comparisons will continue until either a match is found or until the list of English language phrases has been exhausted. If no match is found, then no translation will be provided.

Processor 16 may determine that there is a match using any one of a variety of different criteria. In some embodiments, the English language phrase must precisely coincide with the English language message before processor 16 will deem the comparison to be a match. In other embodiments, a less stringent protocol may be implemented that permits processor 16 to determine that a match has occurred when, for example, the discrete words of the English language message and the discrete words of the English language phrase are the same, but are arranged in a differing sequence. In other examples, processor 16 may determine that there is a match when the sequence of words of the English language message is the same as the sequence of words of the English language phrase, but wherein the number of discrete words differs. In some embodiments, the tolerance for deviation between the English language message and the English language phrase will differ depending upon the nature or origin of the message. For example, processor 16 may be calibrated to require that a system warning message more closely match an English language phrase than a system status message.

In instances where processor 16 finds an English language phrase that matches the English language message, processor 16 will then provide instructions to data storage unit 18 to provide the other language phrase that corresponds to the English language phrase. If two or more English language phrases are deemed to be a match with the English language message, processor 16 may be configured to command display unit 20 to display all corresponding other language phrases, while in other embodiments, such circumstances may result in processor 16 not sending any display instructions at all to display unit 20.

Once the corresponding other language phrase is received by processor 16, it then provides commands to display unit 20 to display the other language phrase to the pilot. In some embodiments, the appearance on display unit 20 of the corresponding other language phrase occurs within a relatively short period of time from when the English language message is received. For example, the corresponding other language phrase may appear within two seconds of the receipt of the English language message. In this manner, processor 16, data storage unit 18, and display unit 20 cooperate to translate an English language message into another language which may assist a pilot whose native language is not English to comprehend an English language message originating from a system and/or component onboard aircraft 12.

In instances where the nature of the message is urgent, processor 16 may be further configured to emphasize the other language phrase. This may be accomplished by displaying the other language phrase in a unique color (e.g., red), by underlining the text of the other language phrase, by producing the text in bold type face, by a combination of these techniques or by any other method suitable to attract the pilot's attention to the message.

Each of the various types of display units discussed above are suitable for displaying the other language phrase. Nevertheless, configuring system 10 such that display unit 20 comprises a near-to-eye display unit provides a further advantage. In such embodiments, the pilot will be able to observe the display of the other language phrase regardless of where the pilot is looking at the moment when the English language message is received. Thus, the use of a near-to-eye display unit can be as effective for alerting the pilot to a situation requiring his attention as an auditory alarm would be.

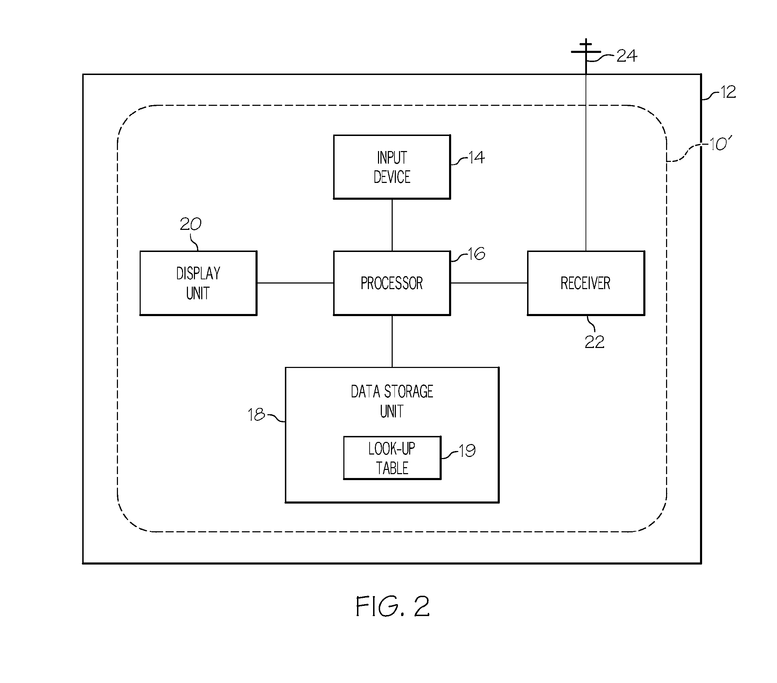

FIG. 2 is a schematic view of another embodiment of a system (system 10') for translating an English language message into another language. System 10' includes a receiver 22 communicatively coupled to processor 16. Receiver 22 may be any type of wireless communications receiver. In one non-limiting example, receiver 22 may be a satellite communications receiver. In other embodiments, receiver 22 may be configured to receive microwave transmission or any other type of RF transmissions. Receiver 22 may include an antenna 24 to detect and receive the wireless communication signals and may include associated electronics to process the received signals. In some embodiments, receiver 22 may be configured to automatically provide any and all signals to processor 16 upon receipt. Receiver 22 may be communicatively coupled to processor 16 in any of the various manners described above.

System 10' is configured to translate English language messages that originate from systems and/or components onboard aircraft 12 and also English language messages that originate from locations external to aircraft 12. For example, many airports have introduced a data link system for communicating with pilots. Such data link systems are used to transmit clearances, and other messages, to the pilots of aircraft under their control. Such English language messages are transmitted by the airport's data link transmitter and received onboard aircraft 12 by antenna 24 and then conveyed to receiver 22. Receiver 22 is configured to provide the English language message to processor 16, which then controls data storage unit 18 and display unit 20 in the manner described above to display an other language phrase corresponding to the English language message.

In addition to transmitting English language messages to pilots via a data link, tower controllers at airports and air traffic controllers at air traffic control facilities also provide English language messages to aircraft under their control using voice communications transmitted via radio broadcasting, for example, on VHF and UHF radio frequencies. For example, a controller commonly provides air traffic control instructions in English by speaking into a microphone attached to a transmitter. The voice communication is broadcast to the aircraft and the pilot hears the controller's voice speaking the English language message through the pilot's headphones or other speaker system. System 10' may be configured to assist a pilot whose native language is not English to understand such spoken English language messages. Processor 16 may be configured to run a voice recognition program that allows the spoken English language message to be converted to text or to any other format usable by system 10'. This converted English language message is then treated by processor 16 in the same manner described above to provide the pilot of aircraft 12 with a visual presentation of the other language phrase corresponding to the controller's spoken English language message.

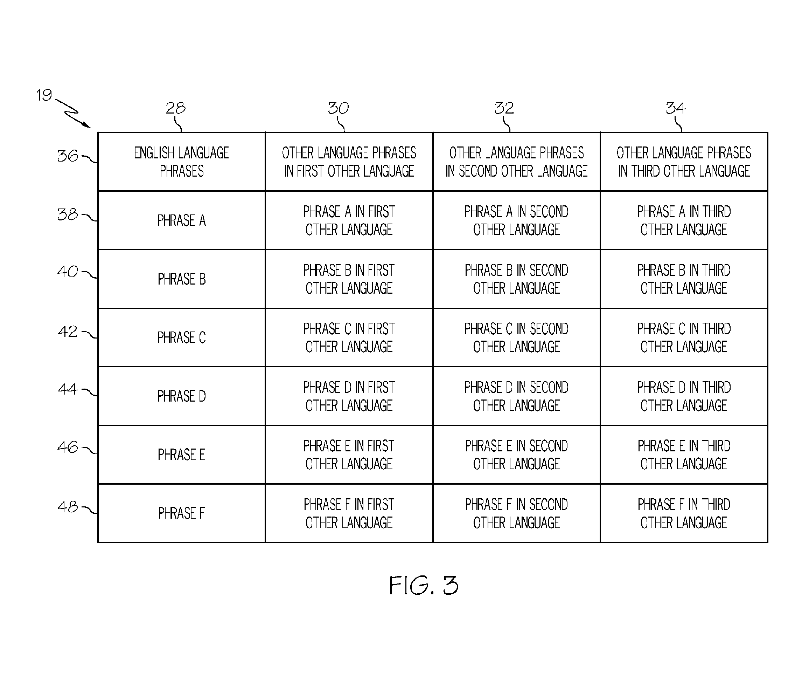

FIG. 3 is an exemplary look-up table 19 compatible for use with systems 10 and 10' illustrated in FIGS. 1 and 2, respectively. In the example illustrated in FIG. 3, look-up table 19 is divided into four columns and seven rows. Row 36 contains the heading for each of the columns below it and rows 38, 40, 42, 44, 46, and 48 contain various phrases in both English and other languages. Column 28 contains a listing of English language phrases that systems 10 and 10' are configured to translate. Columns 30, 32, and 34 contain translations in differing languages of the corresponding English language phrase contained in column 28.

With continuing reference to FIGS. 1 and 2, when processor 16 receives an English language message, processor 16 will obtain the listing of English language phrases contained in column 28 and will then compare the English language message with the English language phrases until a match is found. As illustrated in FIG. 3, look-up table 19 contains other language phrases in a number of different languages. In this example, the pilot would use input device 14 to choose the other language in which systems 10 or 10' will display the other language phrase. Thus, when a match is found, processor 16 will provide commands to data storage unit 18 to provide the other language phrase located in the row where the matching English language phrase was located and in the column corresponding to the other language selected by the pilot.

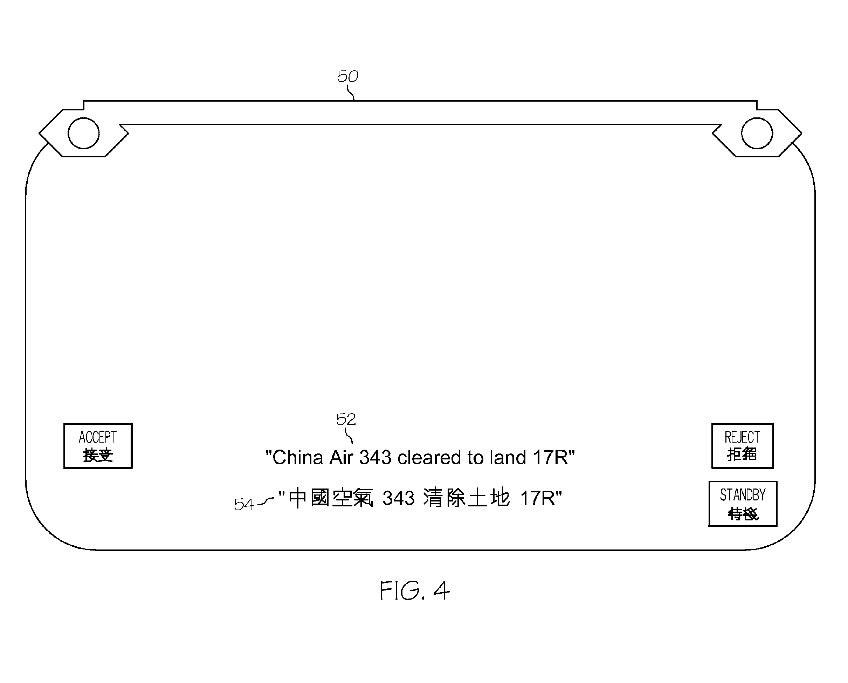

FIG. 4 illustrates an exemplary display screen 50 displaying an English language phrase 52 and a corresponding other language phrase 54. With continuing reference to FIGS. 1 and 2, in this example, system 10 has just received an English language message from a tower controller containing an English language message composed in aviation English. Display screen 50 is displayed on display unit 20 and is positioned to be visible to the pilot. In this example, the pilot has used input device 14 to select a presentation protocol that presents English language phrase 52 and the corresponding other language phrase 54 in a subtitle fashion. In some embodiments, the pilot may also permit the pilot to turn system 10 off. Input device 14 may be further configured to permit the pilot to cycle back and forth through multiple messages and/or to permit the pilot to scroll through a message that is too lengthy to fit on display unit 20 all at once. Input device 14 may also be configured to permit the pilot to select which of several display screens in the aircraft cockpit to display the other language phrase.

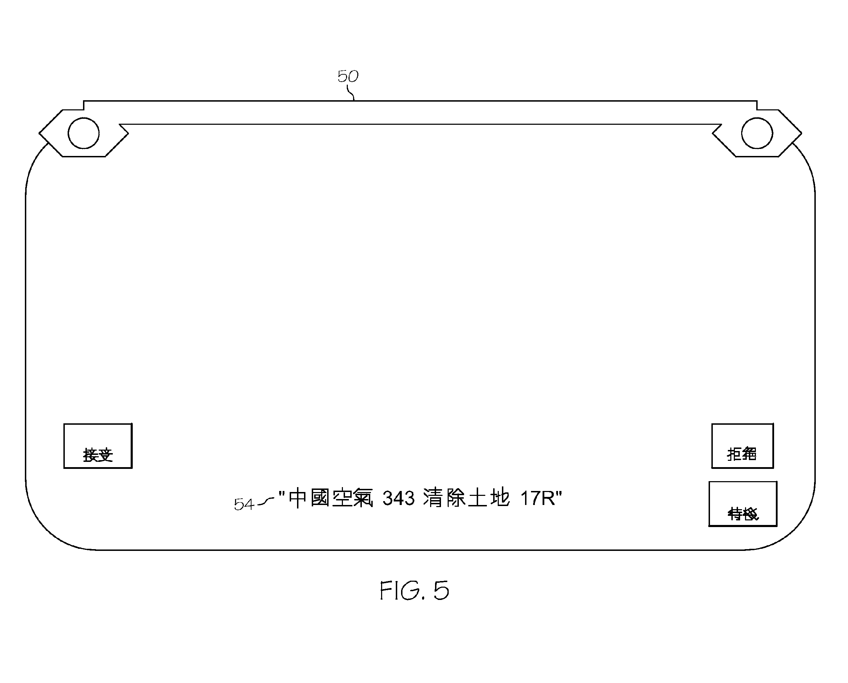

FIG. 5 illustrates display screen 50 displaying only other language phrase 54. With continuing reference to FIGS. 1, 2, and 4, here, the pilot has used input device 14 to select a presentation protocol that eliminates English language phrase 52 and presents only other language phrase 54.

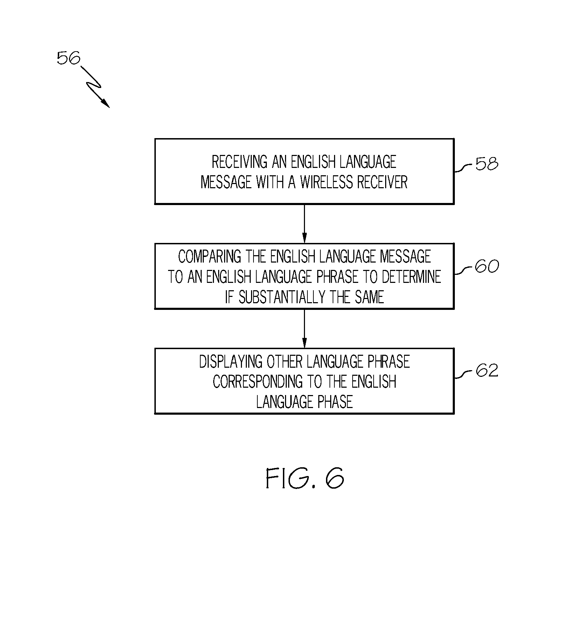

FIG. 6 is a block diagram illustrating various steps of a method 56 for translating an English language message into another language. At block 58, an English language message is received onboard an aircraft. The English language message is contained in a wireless signal that is received by a receiver onboard the aircraft. For example, the English language message may comprise a landing clearance composed in aviation English by a tower controller at an airport that the aircraft is approaching. The wireless signal can be sent from a ground based radio and may comprise either a voice communication or a data link transmission.

At block 60, the English language message is compared with a listing of English language phrases stored onboard the aircraft to determine which, if any of the English language phrases match the English language message. In one example, the comparison is accomplished by a processor on board the aircraft. The list of English language phrases may be stored in one or more look-up tables, or in any other suitable manners. If an English language phrase matching the English language message is located, then a phrase in another language that corresponds to the English language phrase is retrieved from the look-up table.

At block 62, the other language phrase corresponding to the matching English language phrase is displayed to the pilot. The other language phrase may be displayed on any suitable display device including a near-to-eye display unit worn by the pilot.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system (10) for assisting a pilot having a native language other than English to comprehend an English language message received onboard an aircraft (12), the system (10) comprising:
a data storage unit (18) configured to store an English language phrase (28) and an other language phrase (30) corresponding to the English language phrase (28);
a display unit (20) configured to display text in English and in another language corresponding with the other language phrase (30); and
a processor (16) operatively coupled to the data storage unit (18) and to the display unit (20) and configured to be communicatively coupled to a component (14) onboard the aircraft (12), the processor (16) further configured to:
obtain an English language message (52) from the component (14);
retrieve the English language phrase (28) from the data storage unit (18);
compare the English language message (52) with the English language phrase (28);
obtain the other language phrase (30) if the English language message (52) is substantially the same as the English language phrase (28); and
command the display unit (20) to display the other language phrase (30) in the other language.

2. The system (10) of claim 1, further comprising a receiver (12) configured to receive a wireless signal and wherein the English language message (52) is carried by the wireless signal.

3. The system (10) of claim 2, wherein the receiver (22) is configured to receive a radio signal and wherein the English language message (52) is carried by the radio signal.

4. The system (10) of claim 2, wherein the receiver (22) is configured to receive a data link signal and wherein the English language message (52) is carried by the data link signal.

5. The system (10) of claim 2, wherein the English language message (52) comprises an air traffic control clearance for the aircraft (12).

6. The system (10) of claim 1, wherein the component (14) comprises an onboard system of the aircraft, wherein the English language message (52) comprises information pertaining to a condition of the onboard system, and wherein the processor (22) is further configured to command the display unit (20) to display the other language phrase (30) in an emphasized manner.

7. The system (10) of claim 1, wherein the English language message (52) comprises aviation English.

8. The system (10) of claim 1, wherein the display unit (20) comprises a near-to-eye display unit.

9. The system (10) of claim 1, wherein the data storage unit (20) is configured to store the English language phrase (28) and the other language phrase (30) in a look-up table (19).

10. A method (56) for assisting a pilot having a native language other than English to comprehend an English language message (52) received onboard an aircraft (12), the method (56) comprising the steps of:
receiving (58) an English language message (52) with a wireless receiver (22);
comparing (60) the English language message (52) to an English language phrase (28) with a processor (22) to determine if the English language message (52) is substantially the same as the English language phrase (28); and
displaying (62) an other language phrase (30) corresponding to the English language phrase (28) when it is determined that the English language phrase (28) is substantially the same as the English language message (52).
